# EUROPÄISCHE PATENTANMELDUNG

(11) **EP 0 866 328 A1**
(43) Veröffentlichungstag der Anmeldung: **23.09.1998**
(21) Anmeldenummer: 98810162.2
(22) Anmeldetag: 27.02.1998
(51) Int. Cl.: G01N 7/14

(54) **Vorrichtung zur Messung des Gasgehalts von Flüssigkeiten**

(30) Priorität: 14.03.1997 CH 626/97
(71) Anmelder: Stücklin & Cie AG, 4414 Füllinsdorf (CH)
(72) Erfinder: Steffan, Helmut, 79589 Binzen (DE); Oldenziel, Daniel M., 2300 La Chaux-de-Fonds (CH)
(74) Vertreter: Ullrich, Gerhard, Dr.

(57) **Zusammenfassung**

Eine Vorrichtung zur Messung des Gasgehalts von Flüssigkeiten umfasst eine Flüssigkeitskammer (1) mit einem grösseren Kammerteil (12) und einem kleineren Kammerteil (13). Eine Wand der Flüssigkeitskammer (1) weist einen Flüssigkeitsdurchlass (11) zum Füllen und Entleeren der Kammer auf. Der Flüssigkeitsdurchlass (11) ist mit einem Ventil (2) absperrbar. Ein in einem Zylinder (31) angeordneter Kolben (32) dient zum Erzeugen von Unter- und Überdruck in der Flüssigkeitskammer (1). Am kleineren Kammerteil (13) ist eine Skala (8) zum Ablesen des Messergebnisses angebracht. Zur Messung des Gasgehalts wird durch Erzeugung von Unterdruck Flüssigkeit in der Flüssigkeitskammer (1) entgast und das Volumen der entstehenden Gasblase mit der Skala (8) gemessen.

## Beschreibung

Die vorliegende Erfindung bezieht sich auf eine Vorrichtung zur Messung des Gasgehalts von Flüssigkeiten.

Aus der Heizungstechnologie sind sogenannte Druckstufenentgaser bekannt, die in erster Linie dazu dienen, die in der Heizungsflüssigkeit, insbesondere Wasser, gelösten Gase, insbesondere Luft, in die Aussenluft auszuscheiden, unter anderem um eine Korrodierung der Leitungen des Heizungssystems zu verhindern. Die diesen Entgasern zugrundeliegende Druckstufenentgasung beruht auf dem Gesetz von Henry, das besagt, dass je tiefer der Druck in einer Flüssigkeit ist, um so weniger Gas in ihr gelöst sein kann. Durch Absenken des Druckes wird daher Gas in Form von unterschiedlich grossen Blasen aus der Flüssigkeit durch Gasdiffusion über eine freie Oberfläche ausgeschieden.

Diese Druckstufenentgaser ermöglichen zwar eine weitgehende Entgasung der Heizungsflüssigkeit, aber nicht eine Messung ihres Gasgehalts. Da es sinnvoll ist, die Entgaser aufgrund des Gasgehalts der zu entgasenden Flüssigkeit zu steuern, sollte dieser vorteilhafterweise zunächst möglichst genau bestimmt werden.

Der Erfindung liegt daher die Aufgabe zugrunde, eine Vorrichtung zur Messung des Gasgehalts von Flüssigkeiten zu schaffen. Diese Vorrichtung soll zudem leicht bedienbar und möglichst kostengünstig sein.

Diese Aufgabe wird durch die erfindungsgemässe Vorrichtung zur Messung des Gasgehalts von Flüssigkeiten gelöst, wie sie im unabhängigen Patentanspruch 1 definiert ist. Bevorzugte Ausführungsvarianten ergeben sich aus den abhängigen Patentansprüchen.

Das Wesen der Erfindung besteht darin, dass eine Vorrichtung zur Messung des Gasgehalts von Flüssigkeiten eine Flüssigkeitskammer umfasst, deren eine Wand einen Flüssigkeitsdurchlass zum Füllen und Entleeren der Kammer aufweist, sowie eine Absperreinrichtung zum Absperren des Flüssigkeitsdurchlasses, Mittel zum Erzeugen von Unter- und Überdruck in der Flüssigkeitskammer und eine Skala zum Ablesen des Messergebnisses.

Ein wichtiger Vorteil der erfindungsgemässen Vorrichtung ist, dass sie relativ preisgünstig, kompakt und portabel gebaut werden kann. Es sind sowohl rein handbetriebene, stromlose Ausführungsvarianten als auch teilweise oder ganz strombetriebene Ausführungsvarianten möglich.

Die erfindungsgemässe Vorrichtung ermöglicht das Entgasen einer zu messenden Flüssigkeitsprobe durch Druckabsenkung und das anschliessende Messen des Volumens des freiwerdenden Gases bei Normaldruck. Dieses Volumen ist ein Mass für den Gasgehalt der Flüssigkeit.

Zur Messung des Gasgehalts einer Flüssigkeit wird beispielsweise folgendermassen vorgegangen:
a) Öffnen des Flüssigkeitsdurchlasses;
b) Erzeugen von Überdruck in der Flüssigkeitskammer zur Entfernung aller allenfalls noch in der Flüssigkeitskammer vorhandenen Flüssigkeit über den Flüssigkeitsdurchlass;
c) teilweises Eintauchen der Vorrichtung in die zu messende Flüssigkeit, so dass durch Erzeugen von Unterdruck in der Flüssigkeitskammer Flüssigkeit in diese saugbar ist;
d) Erzeugen von Unterdruck in der Flüssigkeitskammer zum Einsaugen einer Flüssigkeitsprobe ohne Einschluss von Gasblasen (dieser Unterdruck wird durch die in die Flüssigkeitskammer fliessende Flüssigkeit kompensiert, so dass sich Normaldruck einstellt) ;
e) Absperren des Flüssigkeitsdurchlasses;
f) Erzeugen von Unterdruck in der Flüssigkeitskammer zum Entgasen der Flüssigkeitsprobe (dieser Unterdruck bleibt vorerst bestehen, da keine weitere Flüssigkeit in die Flüssigkeitskammer fliessen kann; es entsteht eine Gasblase) ;
g) Schütteln der Vorrichtung zum Beschleunigen des Entgasens;
h) Ausgleichen des Unterdrucks (Erzeugen von Normaldruck) in der Flüssigkeitskammer mittels der Mittel zum Erzeugen von Unter- und Überdruck;
i) falls notwendig Drehen der Vorrichtung, so dass die Gasblase bei der Skala zu liegen kommt und
j) Ablesen des Gasgehalts an der Skala.

Die Mittel zum Erzeugen von Unter- und Überdruck umfassen vorzugsweise einen Zylinder mit einem darin bewegbar angeordneten Kolben. Unter- und Überdruck wird dann durch Kolbenbewegung erzeugt.

Je nach zur Verfügung stehendem Hubraum wird die Flüssigkeitskammer in Schritt d) ganz oder nur teilweise gefüllt. Zur vollständigen Füllung der Flüssigkeitskammer muss daher der Kolben eventuell mehrmals vor- und rückwärts bewegt werden. Durch Drehen der Vorrichtung und Ausnutzen der Schwerkraft kann ein Wiederausstossen der bereits in die Flüssigkeitskammer gesogenen Flüssigkeit während des Vorwärtsbewegens des Kolbens verhindert werden.

Vorzugsweise ist die Flüssigkeitskammer in einen grösseren und einen kleineren Kammerteil unterteilt, die miteinander kommunizieren, und die Skala am kleineren Kammerteil angeordnet.

Bei dieser Ausführungsvariante wird die Gasblase in Schritt i) in den kleineren Kammerteil gelenkt. Der Anteil der Gasblase am Volumen des kleineren Kammerteils ist um ein Mehrfaches grösser als am Volumen der ganzen Flüssigkeitskammer, so dass der Gasgehalt genauer abgelesen werden kann als bei einer Ausführungsvariante mit einer einteiligen Flüssigkeitskammer.

Mit Vorteil weist die erfindungsgemässe Vorrichtung einen Flüssigkeitsentnahmeschlauch und einen Flüssigkeitsentsorgungsschlauch auf, die über ein Verbindungsteil und die Absperreinrichtung mit dem Flüssigkeitsdurchlass in Verbindung stehen. Dadurch können auch an relativ schlecht zugänglichen Stellen Flüssigkeitsproben entnommen und die aus der Flüssigkeitskammer ausgestossene Flüssigkeit gezielt entsorgt werden.

Bei einer bevorzugten Ausführungsvariante ist an den Flüssigkeitsentnahmeschlauch eine Filtereinrichtung angeschlossen. Damit wird eine Verschmutzung der Flüssigkeitskammer verhindert.

Vorzugsweise umfasst die Filtereinrichtung ein Gefäss, in dem eine Filtermatte angeordnet ist, sowie einen an eine Rohrleitung anschliessbaren Anschlussschlauch. Eine derartige Ausgestaltung der Filtereinrichtung führt beispielsweise bei heissem, unter Druck stehendem Heizungswasser als zu messender Flüssigkeit zu einer Abkühlung und Drucksenkung und verhindert, dass das Heizungswasser schon während der Zuführung zur Flüssigkeitskammer in einem massgeblichen Ausmass entgast.

Im folgenden wird die erfindungsgemässe Vorrichtung zur Messung des Gasgehalts von Flüssigkeiten unter Bezugnahme auf die beigefügten Zeichnungen anhand eines Ausführungsbeispiels detaillierter beschrieben. Es zeigen:

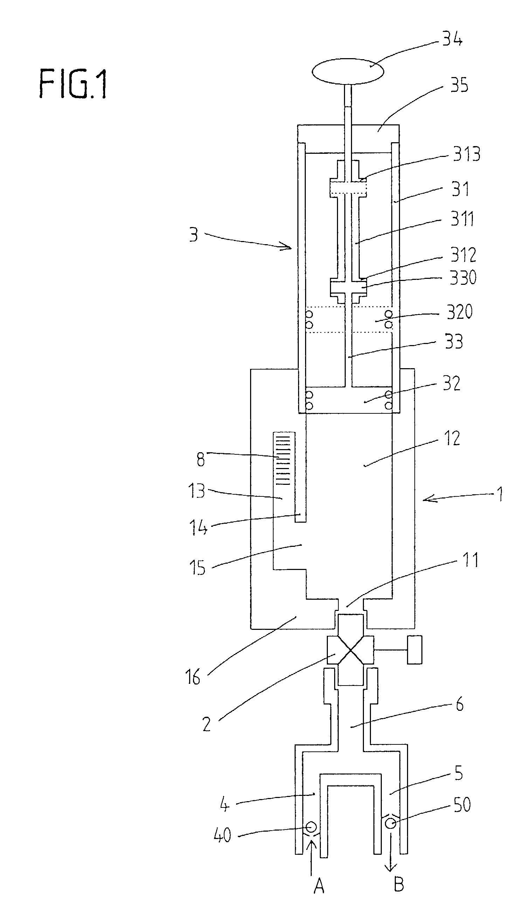

- Fig. 1 -: ein Ausführungsbeispiel der erfindungsgemässen Vorrichtung zur Messung des Gasgehalts von Flüssigkeiten mit geteilter Flüssigkeitskammer, Flüssigkeitsentnahmeschlauch und Flüssigkeitsentsorgungsschlauch in einer Schnittansicht und

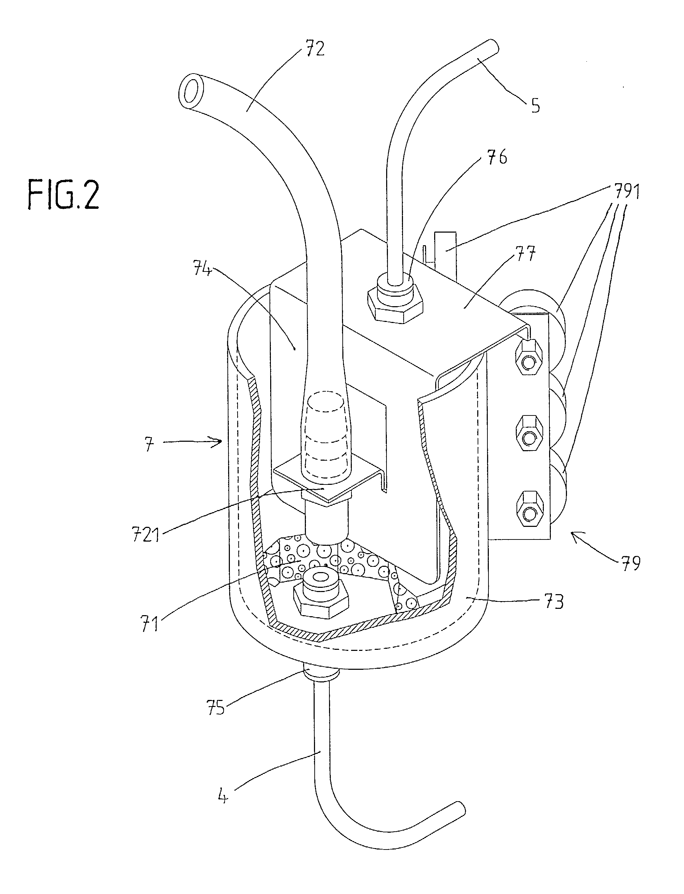

- Fig. 2 -: ein Ausführungsbeispiel einer an den Flüssigkeitsentnahmeschlauch und den Flüssigkeitsentsorgungsschlauch von Fig. 1 angeschlossenen Filtereinrichtung.

### Figur 1

Die dargestellte Vorrichtung umfasst eine Flüssigkeitskammer 1, die durch eine Wand 14 in einen grösseren Kammerteil 12 und einen kleineren Kammerteil 13 unterteilt ist, die über einen Durchlass 15 miteinander kommunizieren. Die beiden Kammerteile 12, 13 sind zylinderförmig. Am kleineren Kammerteil 13 ist eine Skala 8 zum Ablesen des Messergebnisses angebracht. In einer Wand 16 der Flüssigkeitskammer 1 ist ein Flüssigkeitsdurchlass 11 zum Füllen und Entleeren der Kammer angeordnet. Der Flüssigkeitsdurchlass 11 ist mit einer Absperreinrichtung in Form eines Ventils 2 verschliessbar. An dem dem Flüssigkeitsdurchlass 11 gegenüberliegenden Ende des Ventils 2 ist ein Verbindungsteil 6 angebracht, an dem ein Flüssigkeitsentnahmeschlauch 4 und ein Flüssigkeitsentsorgungsschlauch 5 angeschlossen sind. Im Flüssigkeitsentnahmeschlauch 4 ist ein Rückschlagventil 40 und im Flüssigkeitsentsorgungsschlauch 5 ein Rückschlagventil 50 angeordnet, die dafür sorgen, dass die Flüssigkeit im Flüssigkeitsentnahmeschlauch 4 und im Flüssigkeitsentsorgungsschlauch 5 im wesentlichen nur in Richtung der Pfeile A bzw. B fliesst.

Auf der dem Flüssigkeitsdurchlass 11 gegenüberliegenden Seite der Flüssigkeitskammer 1 sind Mittel 3 zum Erzeugen von Unter- und Überdruck angebracht. Diese Mittel 3 umfassen einen Zylinder 31, dessen eines Ende an Wandteilen der Flüssigkeitskammer 1 befestigt ist. Im Zylinder 31 ist ein Kolben 32 über eine Kolbenstange 33 bewegbar angeordnet. Der Kolben 32 ist in seiner vorderen Endposition dargestellt, während seine hintere Endposition bei Bezugszeichen 320 angedeutet ist. Die Kolbenstange 33 ist in einem Zylinderdeckel 35 gelagert und mit einem Handgriff 34 und einem Verriegelungselement 330 versehen. Der Zylinder 31 weist einen Schlitz 311 in Zylinderlängsrichtung und zwei Querschlitze 312 und 313 auf, die ein Verriegeln des Kolbens 32 in seiner vorderen bzw. hinteren Endposition mittels des Verriegelungselements 330 ermöglichen. Das Verriegeln und Entriegeln erfolgt jeweils durch Drehen der Kolbenstange 33.

Zur Messung des Gasgehalts einer Flüssigkeit kann folgendermassen vorgegangen werden:
a) Öffnen des Flüssigkeitsdurchlasses 11 durch Öffnen des Ventils 2;
b) Bewegen des Kolbens 32 in seine vordere Endposition zur Entfernung aller allenfalls noch in der Flüssigkeitskammer 1 vorhandenen Flüssigkeit über den Flüssigkeitsdurchlass 11; falls nötig mehrmaliges Rück- und wieder Vorwärtsbewegen des Kolbens 32;
c) Eintauchen des Flüssigkeitsentnahmeschlauches 4 in die zu messende Flüssigkeit oder direktes oder indirektes (z.B. über eine Filtereinrichtung) Anschliessen des Schlauches an ein flüssigkeitsführendes Organ, z.B. eine Rohrleitung;
d) Füllen der Flüssigkeitskammer 1 durch mehrmaliges Rück- und wieder Vorwärtsbewegen des Kolbens 32, wobei die Vorrichtung allenfalls gedreht werden muss, um durch Ausnutzung der Schwerkraft ein Ausstossen von Flüssigkeit beim Vorwärtsbewegen des Kolbens 32 zu verhindern;
e) Absperren des Flüssigkeitsdurchlasses 11 während der Kolben 32 sich in seiner vorderen Endposition befindet;
f) Bewegen des Kolbens 32 in seine hintere Endposition 320, wodurch in der Flüssigkeitskammer 1 ein Unterdruck erzeugt wird und die darin vorhandene Flüssigkeit entgast;
g) Schütteln der Vorrichtung zum Beschleunigen des Entgasens;
h) Bewegen des Kolbens 32 in seine vordere Endposition zur Erzeugung von Normaldruck;
i) Drehen der Vorrichtung, so dass eine einzige Gasblase entsteht und im blinden Ende des kleineren Kammerteils 13 bei der Skala 8 zu liegen kommt und
j) Ablesen des Gasgehalts an der Skala 8.

### Figur 2

Eine über ein Anschlussstück 75 an den Flüssigkeitsentnahmeschlauch 4 und über ein Anschlussstück 76 an den Flüssigkeitsentsorgungsschlauch 5 angeschlossene Filtereinrichtung 7 umfasst ein becherartiges Gefäss 73, gegen dessen Boden eine Filtermatte 71 durch eine das Gefäss 73 unterteilende Zwischenwand 74 gedrückt wird. Die Zwischenwand 74 geht an ihrem oberen Ende in einen Deckelteil 77 über, an dem das Anschlussstück 76 angebracht ist. Der Deckelteil 77 ist am Gefäss 73 befestigt.

Ein Anschlussschlauch 72 zur Zuführung der zu messenden Flüssigkeit ist mittels einer Halterung 721 an der Zwischenwand 74 fixiert. Er besteht beispielsweise aus Silikon und kann im Gegensatz zum Flüssigkeitsentnahmeschlauch 4 einen praktisch beliebig grossen Durchmesser haben.

Eine am Gefäss 73 fixierte Befestigungsvorrichtung 79 weist mehrere Magnete 791 auf, mit deren Hilfe die Filtereinrichtung 7 an eine Rohrleitung geheftet werden kann.

Über den Anschlussschlauch 72 zugeführte Flüssigkeit durchquert die Filtermatte 71 und gelangt dann gereinigt, mit Normaldruck und gegebenenfalls abgekühlt in den Flüssigkeitsentnahmeschlauch 4.

Die von der Flüssigkeitskammer 1 in den Flüssigkeitsentsorgungsschlauch 5 ausgestossene Flüssigkeit gelangt in einen Gefässteil, der durch die Zwischenwand 74 von dem die zu messende Flüssigkeit enthaltenden Gefässteil getrennt ist, und wird dort bis zum Ende der Messung gespeichert, wonach sie weggeschüttet werden kann.

Zu der vorbeschriebenen Vorrichtung sind weitere konstruktive Variationen realisierbar. Hier ausdrücklich erwähnt seien noch:
- Es können Mittel zum Verwirbeln der Flüssigkeit in der Flüssigkeitskammer 1 während des Entgasungsschrittes vorgesehen sein. Diese Verwirbelmittel ersetzen das Schütteln der Vorrichtung.
- Der Kolben 32 und/oder das Ventil 2 können motorbetrieben sein.

## Patentansprüche

1. Vorrichtung zur Messung des Gasgehalts von Flüssigkeiten, mit einer Flüssigkeitskammer (1), deren eine Wand einen Flüssigkeitsdurchlass (11) zum Füllen und Entleeren der Kammer aufweist, einer Absperreinrichtung (2) zum Absperren des Flüssigkeitsdurchlasses (11), Mitteln (3) zum Erzeugen von Unter- und Überdruck in der Flüssigkeitskammer (1) und einer Skala (8) zum Ablesen des Messergebnisses.

2. Vorrichtung nach Anspruch 1, dadurch gekennzeichnet, dass die Absperreinrichtung, die insbesondere ein Ventil (2) oder ein Hahn sein kann, und/oder die Mittel (3) zum Erzeugen von Unter- und Überdruck so ausgestaltet sind, dass sie stromlos von Hand bedienbar sind.

3. Vorrichtung nach Anspruch 1 oder 2, dadurch gekennzeichnet, dass die Mittel (3) zum Erzeugen von Unter- und Überdruck einen Zylinder (31) mit einem darin bewegbar angeordneten Kolben (32) umfassen.

4. Vorrichtung nach einem der Ansprüche 1 bis 3, dadurch gekennzeichnet, dass die Flüssigkeitskammer (1) in einen grösseren (12) und einen kleineren (13) Kammerteil unterteilt ist, die miteinander kommunizieren, und die Skala (8) am kleineren Kammerteil (13) angeordnet ist.

5. Vorrichtung nach einem der Ansprüche 1 bis 4, dadurch gekennzeichnet, dass sie einen Flüssigkeitsentnahmeschlauch (4) und einen Flüssigkeitsentsorgungsschlauch (5) aufweist, die über ein Verbindungsteil (6) und die Absperreinrichtung (2) mit dem Flüssigkeitsdurchlass (11) in Verbindung stehen.

6. Vorrichtung nach Anspruch 5, dadurch gekennzeichnet, dass im Flüssigkeitsentnahmeschlauch (4) und/oder im Flüssigkeitsentsorgungsschlauch (5) ein Rückschlagventil (40, 50) angeordnet ist.

7. Vorrichtung nach Anspruch 5 oder 6, dadurch gekennzeichnet, dass an den Flüssigkeitsentnahmeschlauch (4) eine Filtereinrichtung (7) angeschlossen ist.

8. Vorrichtung nach Anspruch 7, dadurch gekennzeichnet, dass die Filtereinrichtung (7) ein Gefäss (73) umfasst, in dem eine Filtermatte (71) angeordnet ist, sowie einen an eine Rohrleitung anschliessbaren Anschlussschlauch (72).

9. Vorrichtung nach Anspruch 8, dadurch gekennzeichnet, dass das Gefäss (73) die Form eines Bechers hat und durch eine zur Filtermatte (71) senkrecht stehende, diese gegen den Becherboden drückende Zwischenwand (74) in zwei Gefässteile unterteilt ist, wobei dem einen Gefässteil der Anschlussschlauch (72) und dem anderen der Flüssigkeitsentsorgungsschlauch (5) zugeordnet ist.

10. Verwendung der Vorrichtung nach einem der Ansprüche 1 bis 9 zur Messung des Gasgehalts von Flüssigkeiten in Heizungen.
